# EUROPEAN PATENT SPECIFICATION

(11) **EP 2 836 063 B1**
(45) Date of publication and mention of the grant of the patent: **14.02.2018**
(21) Application number: 13715433.2
(22) Date of filing: 04.04.2013
(51) Int. Cl.: A01G 27/06, A01G 9/16, A01G 9/24, A01K 63/00

(54) **VIVARIUM**
TIERGEHEGE
VIVARIUM

(30) Priority: 13.04.2012 GB 201206557
(43) Date of publication of application: 18.02.2015
(73) Proprietor: OASE Holding U.K. Limited, Southampton SO50 9PD (GB)
(72) Inventor: REYNOLDS, Barry, Rye Sussex TN31 7HE (GB)
(74) Representative: Busse & Busse
(86) International application number: PCT/GB2013/050883
(87) International publication number: WO 2013/153364

(56) References cited:
- EP-A2- 1 250 840
- DE-U1-202010 008 547
- JP-A- 2001 000 049
- US-A- 4 552 093
- US-A1- 2007 144 067
- US-A1- 2011 094 156

## Description

### Field of the Invention

The invention relates to a vivarium and in particular to a terrarium. The specific kind of improvements suggested have particular advantages when used indoors and for relatively small scale self-standing structures of the kind that might be able to sit on a desk or table.

### Background to the Invention and prior art known to the applicant

A typical kind of terrarium would incorporate in its base pebbles and/or soil. A system for misting the terrarium may be employed in order to simulate precipitation from the lid and achieve the levels of humidity which are typically required for tropical plants and/or animals. Whilst a degree of condensation on the lid may be desirable for certain applications, it is not desirable for condensation to be present on the side walls of a vivarium which are ideally free from any condensation in order to provide optimum viewing of the contents. Furthermore, whilst a typical vivarium would be a rectangular cuboid with only a front viewing window, the illumination of the contents of the vivarium is often primarily provided by internal resource hungry arrays of light sources.

The following prior art documents are acknowledged:
- CN201571407U which appears to show an aquarium with only a fan in the base;
- DE102004010625 which appears to show no upper access with a fan;
- US2003/150394 which appears to show no circular or spherical embodiments and therefore appears to fail to facilitate spiral circulation;
- US3903642 which appears to incorporate no fan;
- US7,073,463 which appears to incorporate no fan in the upper portion and no spiral circulation from the top down; and
- US 2007/0144067 A1, which does not include a humidifier.

US2011/94156 discloses a vivarium comprising an upper lid, an optically clear circular side wall, inlet and outlet fans, and a reservoir of water.

### Summary of the Invention

In its broadest independent aspect according to claim 1, the invention provides a vivarium comprising a lid in the upper portion of the vivarium; said lid revealing, in use, an aperture to facilitate access to the vivarium; and an optically clear side wall defining a substantially circular circumference around the contents, in use, of the vivarium; wherein said upper portion incorporates a fan for causing the circulation of air in said vivarium; whereby said fan and said side walls are positioned to cause the air to substantially flow in a spiral motion defined by said sidewalls; wherein means are provided to draw a portion of air from outside the vivarium whilst a portion of air is recirculated; wherein said upper portion incorporates a humidifier which humidifies the air for circulation in the vivarium.

This configuration is particularly advantageous because the fan not only prevents stagnation and therefore aids the plant growth but it also at least minimises or at best prevents condensation forming on the sides of the vivarium, while a desired air humidity level is maintained inside the vivarium or at least quickly brought back to a desired level when an atmosphere exchange with the environment takes place. This allows advantageous viewing of the contents of the vivarium whilst stimulating plant growth. Furthermore, the circulating air provides an envelope for encouraging uniform growth. It also allows light to enter the vivarium from any direction, there is therefore at worst much less directional plant growth or at best none at all due to this configuration of side walls. The flow of air becomes obviously turbulent between the spherical wall of the vivarium and a plant growing preferably in a central portion of the vivarium but the flow of air tends to ensure that the walls remain substantially clear of any undesirable condensation.

The humidifier may for example take the form of a mister which would allow the mist to flow in a spiral motion around the contents. This would allow a distribution of the mist to every portion of the contents.

In a subsidiary aspect, the vivarium further comprises a deflector which deflects a proportion of air exiting said fan and causes air to circulate through said humidifier which outputs humidified air through an outlet into the path of air circulating in said vivarium. This configuration is particularly advantageous since it substantially avoids stagnation of vapour in the humidifier whilst directing the vapour into the flow of air generated by the fan.

In a further subsidiary aspect, the vivarium is substantially spherical. This configuration is particularly advantageous in terms of forming the advantageous flow paths which spiral around the contents. It also allows plants to grow in a relatively natural envelope as they can grow width-wise to a greater extent at the sphere's equator than either at the compost level or at the lid level.

In a further subsidiary aspect, said vivarium is substantially tubular. This configuration is particularly advantageous in terms of uniform distribution of the flow of air.

In a further subsidiary aspect, the upper portion incorporates a substantially circular array of light sources. This configuration distributes the artificial light which is often required whilst at the same time providing a uniform intensity of light which can advantageously prevent the plants from leaning.

In a further subsidiary aspect, the light sources are light emitting diodes (LEDs) arranged around the outside of the aperture of the vivarium.

In a further subsidiary aspect, the vivarium further comprises a base portion with a supporting tray incorporating drainage holes; said supporting tray extending across a base portion to separate, in use, compost from a water reservoir located beneath the supporting tray. This configuration is particularly advantageous in order to facilitate improved plant growth and may even collect condensation resulting from the misting process.

In a further subsidiary aspect, said base portion incorporates capillary means joining said water contained in said reservoir to facilitate the absorption of water from said reservoir into said capillary means. This provides advantageous growth conditions for the plants.

In a further subsidiary aspect, means are provided to draw a proportion of air from outside the vivarium whilst a proportion of air is re-circulated. This is particularly advantageous in order to provide a percentage of external fresh air which will further stimulate plant growth.

In a further subsidiary aspect, a filter is provided through which air entering and exiting the vivarium passes. This configuration is particularly advantageous because it assists in removing possible tank odours whilst keeping the environment healthy.

In a subsidiary aspect, the vivarium comprises a supporting tray incorporating a hinge to allow the tray to be folded. This would be particularly advantageous in terms of entering and removing the other tray.

In a subsidiary aspect, the capillary means incorporate a capillary mat with a substantially circular body and a number of tails extending radially outwards from said circular body. This allows the mat to be placed snugly along the tray and be retained in position without necessarily incorporating additional attachment means than the tails themselves.

In a subsidiary aspect, the vivarium further comprises an air filtration unit which comprises an external inlet aperture through which air from an external environment may be drawn, in use; an internal outlet aperture through which air is drawn when a fan, in use, is located in close proximity to said internal outlet aperture; a first filtration cavity being provided between said external inlet aperture and said internal outlet aperture; said first filtration cavity incorporating filtration medium through which said air is drawn; said first filtration cavity incorporating an internal inlet aperture through which air from the internal environment may be drawn, in use; whereby air from said internal environment is recirculated within the vivarium by passing through said filtration medium as the air is drawn from said internal inlet aperture to said internal outlet aperture whilst fresh air is drawn through said external inlet aperture; wherein said filtration unit further comprises a second filtration cavity incorporating filtration medium; said second filtration cavity incorporating an internal aperture and an external outlet aperture through which air may exit, in use, the vivarium. This configuration is particularly advantageous in order to allow advantageous recirculation of filtered air whilst at the same time allowing a proportion of fresh air to be drawn into the vivarium. This configuration is particularly advantageous in terms of improving plant growth. The present disclosure further provides an air filtration unit comprising an external inlet aperture through which air from an external environment may be drawn, in use; an internal outlet aperture through which air may be drawn by fan, which in use, may be located in close proximity to said internal outlet aperture; a first filtration cavity being provided between said external inlet aperture and said internal outlet aperture; said first filtration cavity incorporating filtration medium through which said air may be drawn, in use; said first filtration cavity incorporating an internal inlet aperture through which air from the internal environment may be drawn, in use; whereby air from said internal environment is recirculated by passing through said filtration medium as the air is drawn from said internal inlet aperture to said internal outlet aperture whilst fresh air is drawn through said external inlet aperture; wherein said filtration unit further comprises a second filtration cavity incorporating filtration medium; said second filtration cavity incorporating an internal aperture and an external outlet aperture through which air may exit, in use, the filtration unit. This configuration is particularly advantageous to improve the quality of the air inside the vivarium whilst limiting odours arising from the vivarium. The unit may be shaped and configured to fit in the lid of a vivarium. The present disclosure further provides a capillary mat comprising a substantially circular body and a number of tails extending radially outwards from said circular body.

This configuration is particularly advantageous in order to be able to reach parts of the reservoir which may be difficult to reach whilst at the same time providing a mat configuration which is uniformly distributed across the top of the tray. The mat may be shaped and configured to fit in the base of a vivarium.

### Brief Description of the Figures

Figure 1 shows a perspective view of a vivarium tank with the lid open.
Figure 2 shows a side elevation of the vivarium tank with the lid open.
Figure 3 shows a perspective view from beneath the vivarium tank with the lid open.
Figure 4 shows a perspective view of the vivarium tank with the lid shut.
Figure 5 shows a side elevation of the vivarium tank with the lid shut.
Figure 6 shows a perspective view of a further embodiment of the invention with the upper portion of the cover open.
Figure 7 shows a side elevation with the cover open of part of the vivarium of a second embodiment of the invention.
Figure 8 shows a perspective view of the vivarium with the upper portion of the cover open; the view being taken from beneath the vivarium.
Figure 9 shows the filtration cartridge in side elevation.
Figure 10 shows a cross-sectional view of the filtration cartridge.
Figure 11 shows a cross-sectional view of the base portion of a second embodiment of the invention.
Figure 12 shows an assembled vivarium in perspective view of the second embodiment of the invention.

### Detailed Description of the Figures

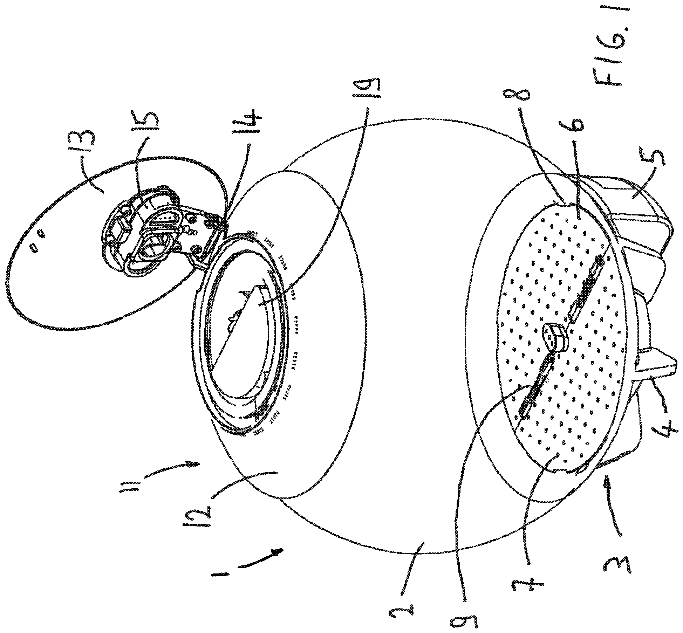

Figure 1 shows a tank 1 in the shape of a sphere. The tank is primarily formed of side walls 2 which are sufficiently clear to allow the contents of the tank to be viewed and for the light to penetrate the tank from any radial direction. The material used for the side walls may preferably be a polymer such as acrylic. This would provide the tank with an advantageous combination of light weight, durability and good thermal insulation. The tank also incorporates a base portion 3 with a number of radially disposed fins 4. Base portion 3 provides the spherical portion 2 of the tank with stability in order to allow the tank to be self-standing. An external access portal (not shown) may be provided in the base to allow ancillary products such as heater cables (not shown) and sensor probes (not shown) to be inserted into the spherical portion. A programmable control unit may be disposed between two radially projecting fins. The programmable control unit may incorporate a user interface which would allow the user to select various levels of lighting, humidity and temperature characteristics. On the inside of the base portion, a supporting tray 6 extends across the tank. Supporting tray 6 incorporates an array of drainage holes 7. The support tray separates the plants and compost from a fresh water reservoir located beneath the support tray.

Capillary matting may be provided to cover the support tray with a number of tails connecting with the water reservoir below. The tails may be provided through apertures in the support tray other than the drainage holes such as peripheral cut outs 8 or elongate cut outs 9.

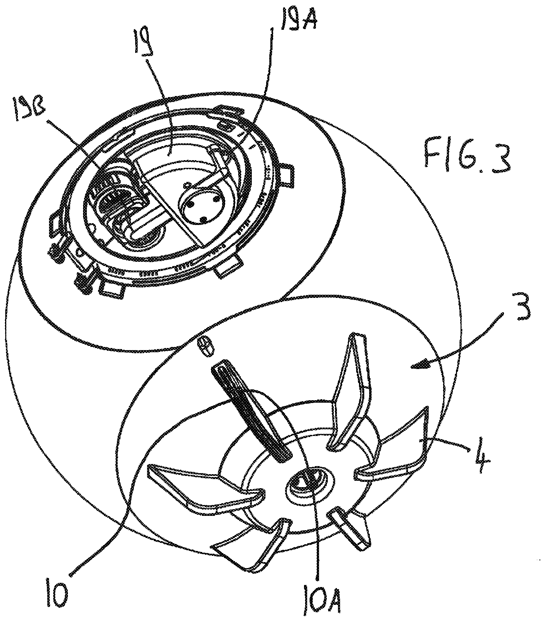

An external water level indicator 10 (shown in figure 3) may be provided as a visible channel in an outer most portion of a radially extending fin 4. The channel of external water level indicator 10 would be in liquid communication with the contents of the reservoir. The channel may be formed by a see-through tube which forms a water conduit between the reservoir and an outlet at the distal extremity of the tube. The tube may be flexible in order to fit snuggling in a tube receiving trough. A number of projections 10A project inwardly in the receiving trough to retain the tube in position as shown in the figure. An operator may separate the tube from the trough by clearing the projections. This may allow the tube to act as a drainage tube in addition to the water level indicator function which it adopts when held by the projections 10A.

An upper portion 11 is formed from a lower cover 12 which fits into an upper aperture provided in the spherical portion 2. The upper portion 11 also incorporates an upper cover 13 which is secured to the lower cover 12 by a hinge 14. The upper cover 13 has a smaller diameter than the lower cover 12. On the underside of the upper cover 13, a fan holder 15 is secured.

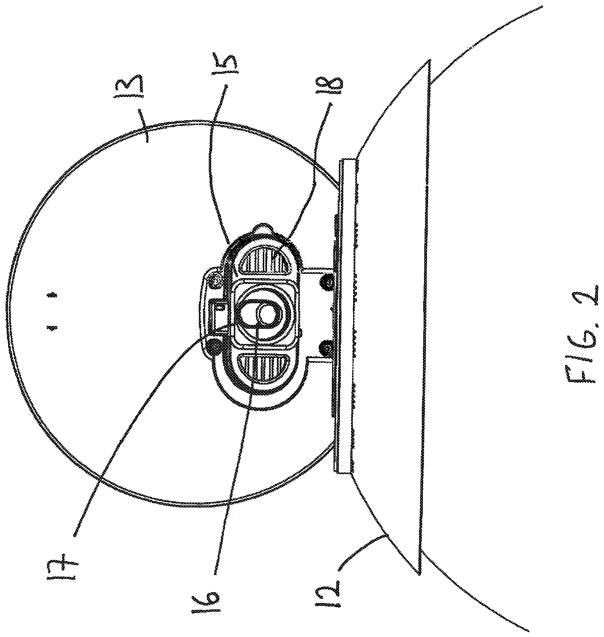

As best seen in figure 2, fan holder 15 incorporates a fan 16 which when activated causes the circulation of air within the tank. The axis of rotation of the fan may be substantially vertical and may optionally be co-axial with the vertical axis of the tank. The lower portion 17 of the fan holder 15 directs the air through a replaceable filter cartridge 18. The air within the tank is drawn through the replaceable cartridge filter 18 thereby removing possible tank odours and keeping the environment healthy. A venturi is provided in order to ensure that the fan draws a percentage of external fresh air into the tank. The external air which is drawn through the venturi also passes through the filter to ensure in a preferred embodiment that external pollutants are not drawn into the tank.

Adjacent to the filter 18 on the upper portion of cover 12, there is provided a water mister holder 19 which comprises an ultrasonic emitter (not shown) and a reservoir (not shown). If the level of humidity detected by an appropriately positioned sensor in the tank falls below a particular level, the ultrasonic emitter causes the water in the tank to evaporate and the mist generated is effectively drawn out of the upper portion of the reservoir into the swirling air flow generated by the fan. A proportion of the air drawn by the fan is captured by deflector 19B and circulated over the evaporating water in the mister and exits through outlet 19A into the path of the swirling air.

Either a humidity sensor or a combined humidity and temperature sensor may be provided at any appropriate location within the tank to control the ultrasonic misting device in order to maintain humidity and/or temperature within a predetermined range or at a predetermined level.

LEDs may be arranged around the outside of the aperture in the spherical portion. These may be secured to the lower cover 12 at regular intervals in a circular array.

In a preferred embodiment, the LEDs emit light at 6,500 Kelvin in order to achieve optimum output for growth and natural colour rendition.

In a preferred embodiment, the vivarium would incorporate a loud speaker or other sound effect producing means. These means may be configured to be one or more of the following sounds: rain, jungle, and/or thunder. The control unit may be employed to synchronise the emission of sounds with the mode of operation of the humidifier which may also be known as a fogger or a mister.

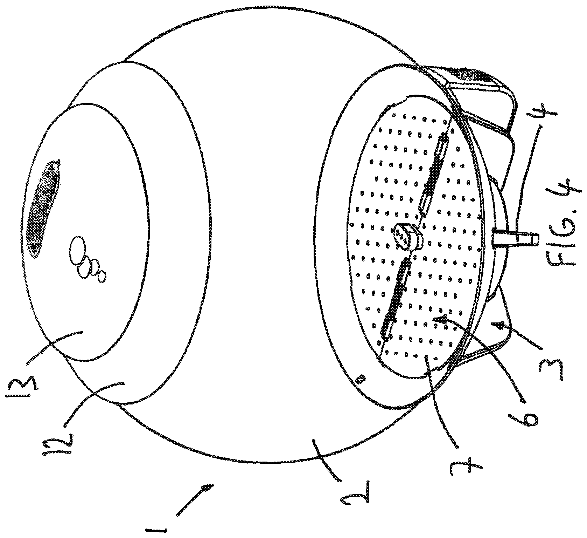

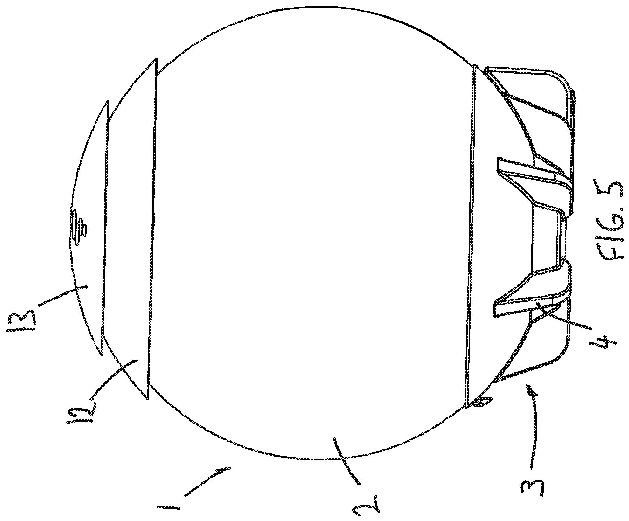

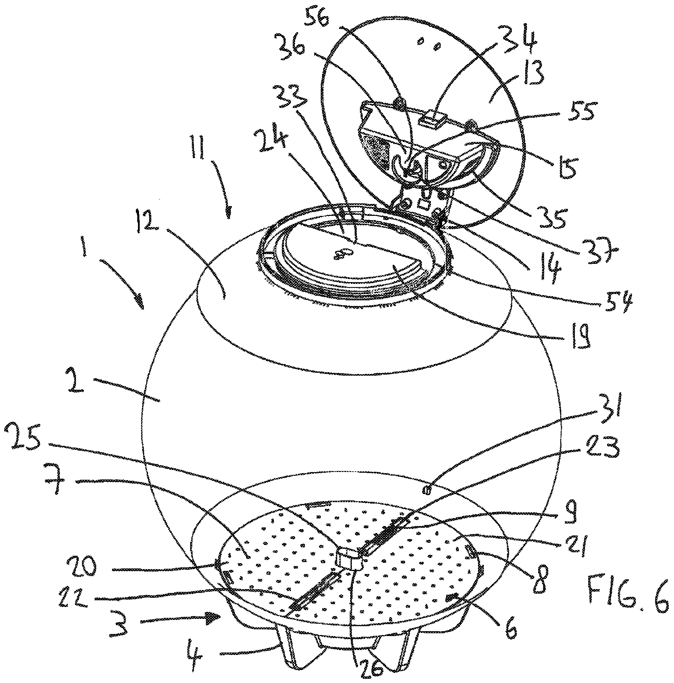

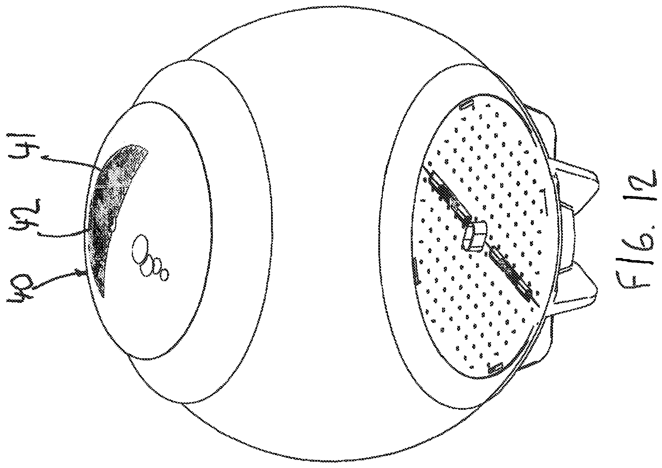

Figures 6 to 12 concern a modified version of the embodiment of Figures 1 to 5. Since many of the features of this further embodiment are common with the features of the first embodiment, identical numerical references haves been used for simplicity. The description of the further embodiment will therefore substantially be the same as the description of the first embodiment. Nevertheless, a number of specific components will now be described in further detail.

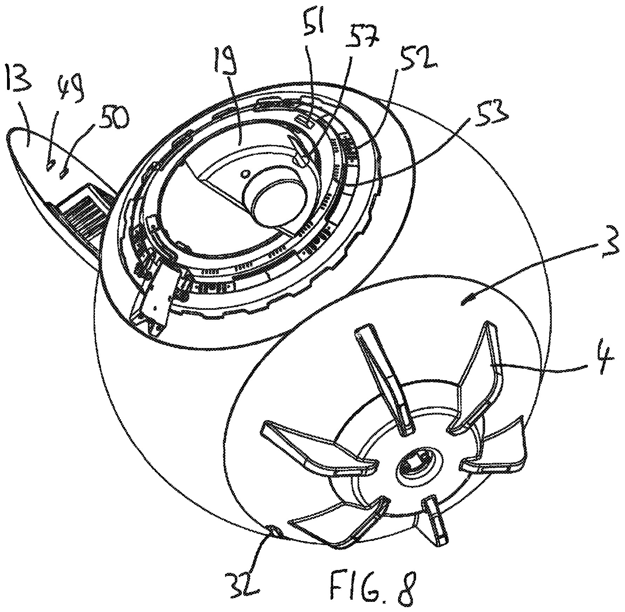

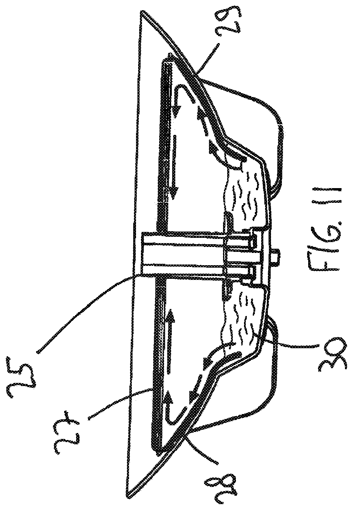

In Figure 6, base 6 preferably comprises two halves 20 and 21, separated by hinges 22 and 23, This is particularly advantageous since it allows the base to be folded in order to readily pass through aperture 24 of cover 12. Instead of the peripheral cut outs of the first embodiment, the cut outs 8 of the further embodiment are adjacent to the perimeter. These constitute regularly spaced slots. Boss 25 protrudes through a central hole 26. As shown in Figure 1 1, boss 25 is tapered upwardly in order to snugly fit against hole 26 of the base 6. Figure 11 shows the base portion in cross-section with a capillary mat 27 extending over the base or supporting tray 6. A number of tails such as tails 28 and 29 are threaded through slots 8 in the supporting tray 6 and dip into reservoir 30 of the base portion. The base portion also incorporates at an upper portion an overflow conduit whose mouth 31 may be seen in Figure 6. An external outlet portion is provided as shown in Figure 8 and referenced 32.

As in the first embodiment, lower cover 12 interacts with the upper cover 13. A circular seal 54 is provided between the upper cover and lower cover in order to efficiently maintain the level of humidity in the internal environment of the vivarium. Furthermore, a seal is provided between holder 15 and water mister holder 19. This further seal may be an elongate strip located on the radially innermost surface of holder 15.

A water-mister holder 19 is provided on the lower cover 12 whilst the fan and filtration enclosure 15 is provided on the upper cover 13. The fan holder has an outlet 55 which in a preferred embodiment is crescent shaped and which incorporates a deflector 56 which is positioned to capture a proportion of the air which would otherwise exit outlet 55. The proportion of the air which is deflected exits the fan holder through outlet 34 which is in communication with inlet 33 of the water mister. The mist produced by the mister is then entrained and exits the mister via outlet 57 (shown on figure 8). The mist then enters the swirling air already circulating in the vivarium and is thereby distributed around the vivarium substantially without condensing onto the inner surface of the vivarium's wall. Should the water in the mister fall below a predetermined level, the mister employs a detector which then switches off the misting process.

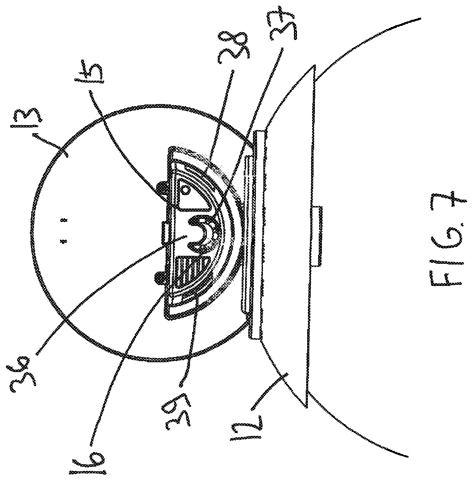

Within holder 15 a bowed window 35 is provided through which air may be drawn out of the vivarium. In the lower face 36 of holder 15 a crescent-shaped aperture 37 allows pumped air to enter into the living area of the vivarium. As shown in Figure 7, bowed window 35 may be formed of two separate windows 38 and 39 located on opposite sides of the holder 15.

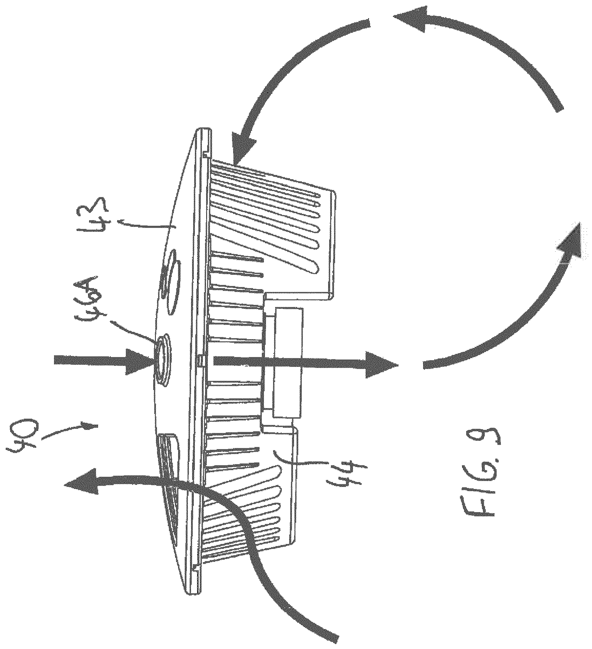

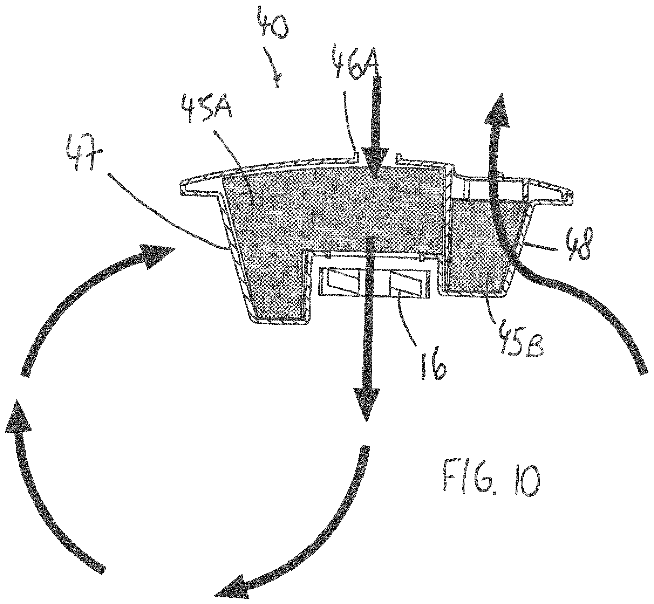

In addition to securing the fan, holder 15 also incorporates a filtration cartridge generally referenced 40 (see Figures 9, 10 and 12). In order to remove filtration cartridge 40, a crescent-shaped window 41 may be opened. This window 41 may incorporate a number of closely contiguous holes 42. The filtration cartridge has an upper surface 43 which may be dome-shaped. In addition to the upper dome-shaped portion of the filtration cartridge, there is provided a lower portion 44 which together with the upper portion forms an enclosure for housing respective filters 45A and 45B. Air is drawn through the hole 46A by fan 16. Whilst a proportion of air is drawn by the fan from the outside environment a relatively large proportion of the air is drawn through perforated side wall 47. The side wall perforations are elongate or oblong perforations extending substantially upwards. The relative size of the hole 46A and the combined area of the perforations in the side wall ensure that most of the air is recirculated and therefore only a relatively small proportion of the air drawn into the vivarium originates from the outside environment. This ensures that appropriate levels of humidity are maintained within the enclosure of the vivarium. A further side wall 48 is also perforated to allow a proportion of air to exit the vivarium. A second kind of filter 45B is provided in this section of the filtration cartridge. The proportions of the filtration cartridge are such that a relatively minor proportion of air enters and exits the vivarium relative to the proportion of air which is recirculated. With regard to the airflow shown in Figures 9 and 10 the arrows are a generalisation of the flow pattern because due to the action of the pump or fan 16, the air will tend to swirl in a spiral form with the vertical axis of the spiral being substantially in line with the central axis of the fan 16. There will obviously be in practice some turbulence due the contents of the vivarium. However, the fan induced circulation of air between the spherical wall of the vivarium and the contents of the vivarium tends to substantially clear if not completely clear the see-through wall of the vivarium of any condensation despite the high humidity levels achieved.

With reference to Figure 8, the upper portion 13 of the cover may incorporate releasable attachment means. In this embodiment, the releasable attachment means may incorporate two downwardly projecting fasteners 49 and 50 which may be inserted into aperture 51 in the lower portion 12 of the cover. At the extremities of fasteners 49 and 50 a lateral projection may lock the fasteners into place. Alternatively, the fasteners may simply be held by friction against the side walls of aperture 41. A number of LED clusters such as cluster 52 may also be provided under cover portion 12. These LEDs may be programmed to mimic the natural cycle of the sun/moon light. In addition, a number of cut outs 53 may allow the illumination to light up the space between upper and lower portions of the cover.

## Claims

1. A vivarium (1) comprising a lid (13) in an upper portion (11) of the vivarium (1); said lid (13) revealing, in use, an aperture to facilitate access to the vivarium (1); and an optically clear side wall (2) defining a substantially circular circumference around the contents, in use, of the vivarium (2); wherein said upper portion (1) incorporates a fan (16) for causing the circulation of air in said vivarium (1); whereby said fan (16) and said side wall (2) are positioned to cause the air to substantially flow in a spiral motion defined by said side wall (2); wherein means are provided to draw a proportion of air from outside the vivarium (1) whilst a proportion of air is recirculated; wherein said upper portion (11) incorporates a humidifier (2) which humidifies the air for circulation in the vivarium (1).

2. A vivarium according to claim 1, wherein the upper portion (11) is formed as an openable cover (12, 13) with a lower cover (12) and an upper cover (13) to which a fan holder (15) incorporating a fan (16) is secured.

3. A vivarium according to either claim 1 or claim 2, further comprising a deflector (19b) which deflects a proportion of air exiting said fan (16) and causes air to circulate through said humidifier (19) which outputs humidified air through an outlet into the path of air circulating in said vivarium (1).

4. A vivarium according to any of the preceding claims, wherein said vivarium (1) is substantially spherical.

5. A vivarium according to any of claims 1 to 3, wherein said vivarium (1) is substantially tubular.

6. A vivarium according to any of the preceding claims, wherein said upper portion (11) incorporates a substantially circular array of light sources (52).

7. A vivarium according to any of the preceding claims, further comprising a base portion (3) with a supporting tray (6) incorporating drainage holes (7); said supporting tray (6) extending across said base portion (3) to separate, in use, compost from a water reservoir (30) located beneath the supporting tray (6).

8. A vivarium according to claim 7, wherein said supporting tray (6) incorporates a hinge (22) to allow the tray (6) to be folded.

9. A vivarium according to either claim 7 or claim 8, wherein said base portion (3) incorporates capillary means (27) joining said water contained in said reservoir (30) to facilitate the absorption of water from said reservoir into said capillary means (27).

10. A vivarium according to claim 9, wherein said capillary means (27) incorporate a capillary matt (27) with a substantially circular body and a number of tails (28,29) extending radially outwards from said circular body.

11. A vivarium according to any of the preceding claims, wherein a filter is provided through which air entering and exiting the vivarium passes.

12. A vivarium according to any of the preceding claims, further comprising an air filtration unit (40) which comprises an external inlet aperture (46) through which air from an external environment may be drawn, in use; an internal outlet aperture through which air is drawn when the fan (16), in use, is located in close proximity to said internal outlet aperture; a first filtration cavity being provided between said external inlet aperture and said internal outlet aperture; said first filtration cavity incorporating filtration medium through which said air is drawn; said first filtration cavity incorporating an internal inlet aperture through which air from the internal environment may be drawn, in use; whereby air from said internal environment is recirculated within the vivarium by passing through said filtration medium as the air is drawn from said internal inlet aperture to said internal outlet aperture whilst fresh air is drawn through said external inlet aperture; wherein said filtration unit further comprises a second filtration cavity incorporating filtration medium; said second filtration cavity incorporating an internal aperture and an external outlet aperture through which air may exit, in use, the vivarium.

## Patentansprüche

1. Tierbehälter (1), aufweisend einen Deckel (13) in einem oberen Abschnitt (11) des Tierbehälters (1);
wobei der Deckel (13) im Einsatz eine Öffnung offenlegt, um Zugang zu dem Tierbehälter (1) zu erleichtern; und eine optisch klare Seitenwand (2), welche im Einsatz einen im Wesentlichen kreisförmigen Umfang um den Inhalt des Tierbehälters (2) herum definiert; wobei der obere Abschnitt (1) ein Gebläse (16) enthält, um Luftzirkulation in dem Tierbehälter (1) herbeizuführen; wobei das Gebläse (16) und die Seitenwand (2) positioniert sind, um die Luft zu veranlassen, um im Wesentlichen in einer von der Seitenwand (2) definierten spiralförmigen Bewegung zu strömen; wobei Mittel vorgesehen sind, um einen Luftanteil von außerhalb des Tierbehälters (1) anzusaugen, während ein Luftanteil rezirkuliert wird; wobei der obere Abschnitt (11) einen Luftbefeuchter (2) enthält, welcher die Luft zur Zirkulation in dem Tierbehälter (1) befeuchtet.

2. Tierbehälter nach Anspruch 1, wobei der obere Abschnitt (11) als eine zu öffnende Abdeckung (12, 13) mit einer unteren Abdeckung (12) und einer oberen Abdeckung (13), an welcher ein ein Gebläse (16) enthaltender Gebläsehalter (15) befestigt ist, ausgebildet ist.

3. Tierbehälter nach entweder Anspruch 1 oder Anspruch 2, weiter aufweisend einen Abweiser (19b), welcher einen Teil der das Gebläse (16) verlassenden Luft ablenkt und Luft veranlasst, durch den Luftbefeuchter (19) zu zirkulieren, welcher befeuchtete Luft durch einen Austritt in den Pfad von in dem Tierbehälter (1) zirkulierender Luft ausgibt.

4. Tierbehälter nach einem der vorhergehenden Ansprüche, wobei der Tierbehälter (1) im Wesentlichen kugelförmig ist.

5. Tierbehälter nach einem der Ansprüche 1 bis 3, wobei der Tierbehälter (1) im Wesentlichen rohrförmig ist.

6. Tierbehälter nach einem der vorhergehenden Ansprüche, wobei der obere Abschnitt (11) ein im Wesentlichen kreisförmiges Feld von Lichtquellen (52) enthält.

7. Tierbehälter nach einem der vorhergehenden Ansprüche, weiter aufweisend einen Bodenabschnitt (3) mit einem tragenden Einsatz (6), welcher Ablauflöcher (7) enthält; wobei sich der tragende Einsatz (6) über den Bodenabschnitt (3) erstreckt, um im Einsatz Kompost von einem unterhalb des tragenden Einsatzes (6) befindlichen Wasserreservoirs (30) zu trennen.

8. Tierbehälter nach Anspruch 7, wobei der tragende Einsatz (6) ein Scharnier (22) enthält, um es dem Einsatz (6) zu ermöglichen, geklappt zu werden.

9. Tierbehälter nach entweder Anspruch 7 oder Anspruch 8, wobei der Bodenabschnitt (3) Kapillarmittel (27) enthält, welche in das in dem Reservoir (30) enthaltene Wasser reichen, um die Absorption von Wasser in die Kapillarmittel (27) zu erleichtern.

10. Tierbehälter nach Anspruch 9, wobei die Kapillarmittel eine Kapillarmatte (27) mit einem im Wesentlichen kreisförmigen Körper und einer Anzahl von Enden (28, 29) enthalten, welche sich aus dem kreisförmigen Körper radial nach außen erstrecken.

11. Tierbehälter nach einem der vorhergehenden Ansprüche, wobei ein Filter vorgesehen ist, durch welchen in den Tierbehälter eintretende und aus diesem austretende Luft strömt.

12. Tierbehälter nach einem der vorhergehenden Ansprüche, weiter aufweisend eine Luftfiltrierungseinheit (40), welche eine äußere Einlassöffnung (46), durch welche im Einsatz Luft von einer äußeren Umgebung angesaugt werden kann; eine innere Auslassöffnung, durch welche Luft angesaugt wird, wenn das Gebläse (16) im Einsatz in nächster Nähe zu der inneren Auslassöffnung angeordnet ist; einen ersten Filtrierungshohlraum, welcher zwischen der äußeren Einlassöffnung und der inneren Auslassöffnung vorgesehen ist, aufweist; wobei der erste Filtrierungshohlraum ein Filtrierungsmedium enthält, durch welches Luft angesaugt wird; wobei der erste Filtrierungshohlraum eine innere Einlassöffnung enthält, durch welche im Einsatz Luft von der inneren Umgebung gesaugt werden kann; wobei Luft von der inneren Umgebung innerhalb des Tierbehälters rezirkuliert wird, indem sie durch das Filtrierungsmedium strömt, wenn Luft von der inneren Eintrittsöffnung zu der inneren Austrittsöffnung gesaugt wird, während Frischluft durch die äußere Eintrittsöffnung gesaugt wird; wobei die Filtrierungseinheit weiter einen ein Filtrierungsmedium enthaltenden zweiten Filtrierungshohlraum aufweist; wobei der zweite Filtrierungshohlraum eine innere Öffnung und eine äußere Auslassöffnung enthält, durch welche Luft im Einsatz aus dem Tierbehälter austreten kann.

## Revendications

1. Vivarium (1) comportant un couvercle (13) dans sa partie supérieure (11) ;
ledit couvercle révélant, en cours d'utilisation, une ouverture pour faciliter l'accès au vivarium (1) ; et
une paroi latérale optiquement claire (2) définissant une circonférence fondamentalement circulaire autour du contenu, en cours d'utilisation, du vivarium (2) ; ladite partie supérieure (11) incorporant un ventilateur (16) pour provoquer une circulation d'air dans ledit vivarium (1) ; où ledit ventilateur (16) et ladite paroi latérale (2) sont positionnés de façon à faire s'écouler l'air substantiellement en un mouvement en spirale défini par ladite paroi latérale (2) ; où sont fournis des moyens pour extraire une partie de l'air d'en dehors du vivarium (1) pendant qu'une proportion d'air est mise en recirculation ; où ladite partie supérieure (11) incorpore un humidificateur (19) qui humidifie l'air destiné à être recirculé dans le vivarium (1).

2. Vivarium selon la revendication 1, dans lequel la partie supérieure (11) est conçue sous la forme d'un couvercle ouvrable (12, 13) avec un couvercle inférieur (12) et un couvercle supérieur (13) auquel est fixé un support de ventilateur (15) incorporant un ventilateur (16) .

3. Vivarium selon la revendication 1 ou 2, comprenant en outre un déflecteur (16b) qui dévie une partie de l'air qui quitte ledit ventilateur (16) et amène l'air à circuler à travers ledit humidificateur (19) qui produit de l'air humidifié à travers une sortie dans la voie de circulation de l'air circulant dans ledit vivarium (1).

4. Vivarium selon l'une quelconque des revendications précédentes, ledit vivarium (1) étant substantiellement sphérique.

5. Vivarium selon l'une quelconque des revendications 1 à 3, ledit vivarium (1) étant substantiellement tubulaire.

6. Vivarium selon l'une quelconque des revendications précédentes, dans lequel ladite partie supérieure (11) incorpore un ensemble substantiellement circulaire de sources lumineuses (52).

7. Vivarium selon l'une quelconque des revendications précédentes, comprenant en outre une partie de base (3) avec un plateau support (6) incorporant des orifices de drainage (7) ; ledit plateau support (6) s'étendant à travers ladite partie de base (3) pour séparer, en cours d'utilisation, le compost d'un réservoir d'eau (30) situé sous le plateau support (6).

8. Vivarium selon la revendication 7, dans lequel ledit plateau support (6) incorpore une charnière (22) pour permettre de plier le plateau (6).

9. Vivarium selon la revendication 7 ou 8, dans lequel ladite partie de base (3) incorpore des moyens capillaires (27) rejoignant ladite eau contenue dans ledit réservoir (30) pour faciliter l'absorption d'eau dudit réservoir dans lesdits moyens capillaires (27).

10. Vivarium selon la revendication 9, dans lequel lesdits moyens capillaires (27) incorporent un tapis capillaire (27) avec un corps fondamentalement circulaire et un certain nombre de queues (28, 29) s'étendant radialement vers l'extérieur depuis ledit corps circulaire.

11. Vivarium selon l'une quelconque des revendications précédentes, dans lequel est fourni un filtre par lequel passe de l'air entrant et sortant du vivarium.

12. Vivarium selon l'une quelconque des revendications précédentes, comprenant en outre une unité de filtration d'air (40) qui comprend une ouverture d'entrée externe (46) par laquelle on peut extraire de l'air d'un environnement externe, en cours d'utilisation ; une ouverture de sortie interne, par laquelle est extrait l'air quand le ventilateur (16) est en cours d'utilisation, est située à proximité immédiate de ladite ouverture de sortie interne ; une première cavité de filtration étant fournie entre ladite ouverture d'entrée interne et ladite ouverture de sortie interne ; ladite première cavité de filtration incorporant un médium de filtration à travers lequel est extrait de l'air ; ladite première cavité de filtration incorporant une ouverture d'entrée interne à travers laquelle peut être extrait de l'air de l'environnement interne, en cours d'utilisation ; dans ces conditions, de l'air dudit environnement interne est recirculé à l'intérieur du vivarium en passant à travers ledit médium de filtration lorsque l'air est extrait de ladite ouverture d'entrée interne vers ladite ouverture de sortie interne tandis que de l'air frais est extrait à travers ladite ouverture d'entrée externe ; ladite unité de filtration comprenant en outre une seconde cavité de filtration incorporant un médium de filtration ; ladite seconde cavité de filtration incorporant une ouverture interne et une ouverture de sortie externe à travers laquelle de l'air peut sortir du vivarium, en cours d'utilisation.
